# EUROPÄISCHE PATENTSCHRIFT

(11) **EP 0 407 853 B1**
(45) Veröffentlichungstag und Bekanntmachung des Hinweises auf die Patenterteilung: **12.01.1994**
(21) Anmeldenummer: 90112629.2
(22) Anmeldetag: 03.07.1990
(51) Int. Cl.: A01K 11/00

(54) **Ohrmarke für Tiere**
Ear tag for animals
Etiquette à attacher aux oreilles des animaux

(30) Priorität: 11.07.1989 GB 8915879; 05.09.1989 DE 3929387
(43) Veröffentlichungstag der Anmeldung: 16.01.1991
(73) Patentinhaber: CAISLEY GmbH, D-46395 Bocholt-Lowick (DE)
(72) Erfinder: Nehls, Reinhard, D-4290 Bocholt-Hemden (DE)
(74) Vertreter: Peerbooms, Rudolf, Dipl.-Phys.

(56) Entgegenhaltungen:
- EP-A- 0 031 227
- EP-A- 0 077 707
- EP-A- 0 219 186
- WO-A-86/00498

## Beschreibung

Die Erfindung betrifft eine Ohrmarke für Tiere, welche einen durch die Ohrmuschel zu stechenden, angespitzten Stift, der an seinem der Spitze gegenüberliegenden Ende mit einem verdickten Kopf versehen ist, und zwei laschenförmige Flachteile aufweist, die jeweils mit einem Auge versehen sind, durch welche der Stift unter Einfassung der Ohrmuschel hindurchsteckbar ist, wobei der Stift und die beiden Flachteile als unlösbare Schnappverbindung ausgebildet sind, wozu der Stift neben seiner Spitze und neben seinem Kopf mit je einem im Durchmesser reduzierten Abschnitt versehen ist, dessen Durchmesser etwa gleich dem Innendurchmesser der Augen ist, und wobei der Stift jeweils zwischen den Flachteilen und der durchstochenen Ohrmuschel liegende Abkneifzonen zum Trennen der Ohrmarke von der Ohrmuschel aufweist.

Es ist bekannt, Tiere mit einem Transponder, d. h. Antwortsender, zu versehen, wobei eine Anbringungsart darin besteht, solche elektronischen Sender im Tier zu implantieren. Diese Anbringungsart scheidet aber insbesondere bei Schlachtvieh aus, da nicht sicherzustellen ist, daß auf einem Schlachthof tatsächlich alle implantierten Sender gefunden und entfernt werden. Nach einer anderen weit verbreiteten Praxis werden die optischen Identifikationsmarken für Tiere, speziell die Ohrmarken, zusätzlich mit einem elektronischen Sender versehen. Bei dieser Art ist sichergestellt, daß auf einem Schlachthof bei Abnahme der sichtbaren Kennzeichnungsmarken auch der elektronische Sender mitentfernt wird.

Durch die EP-0 219 186 A1 ist eine Ohrmarke für Tiere bekannt, bei welcher in einem an der Ohrmuschel zu befestigenden Flachteil ein Aufnahmeraum für einen elektronischen Sender vorgesehen ist, der nach Einbau des Senders durch Verleimen, Verschweißen oder dgl. sicher in diesem Flachteil l eingeschlossen ist. Bei dieser bekannten Ohrmarke ist aber nachteilig, daß der Sender nicht umhängesicher ist. Denn nach Abkneifen des die Ohrmuschel durchsetzenden und den Flachteil fixierenden Stiftes kann dieser Flachteil mit eingebaut em Sender ohne weiteres unter Verwendung eines neuen Stiftes an einem anderen Tier angebracht werden, so daß die Möglichkeit von unerlaubten Manipulationen besteht.

Eine gattungsgemäße Ohrzange ist durch die EP 0 031 227 A1 bekannt, welche aus einem angespitzten Stift und zwei mit Augen versehenen Flachteilen besteht. Der Stift ist, unter Einfassung der Ohrmuschel zwischen den beiden Flachteilen, durch deren Augen hindurchsteckbar, wobei die beiden Flachteile und der Stift als unlösbare Schnappverbindung ausgebildet sind. Wegen der großen Flachteile ist diese Ohrmarke praktisch nicht von der Ohrmuschel abziehbar, sondern dort muß der Stift zwischen Ohrmuschel und einem der Flachteile mittels einer Zangeabgekniffen werden, so daß der dabei zerstörte Stift nicht wieder verwendet werden kann. Allerdings können die beiden, die Tierkennzeichnung tragenden Flachteile danach in Verbindung mit einem neuen Stift verwendet werden, so daß mit der gattungsgemäßen Ohrmarke noch unerlaubte Manipulationen vorgenommen werden können.

Durch die WO 86/00498 ist ferner eine einteilige Ohrmarke bekannt, welche einen durch eine Ohrmuschel unmittelbar hindurchsteckbaren Stift aufweist, der mit einer pfeilförmigen Spitze und am rückwärtigen Ende mit einem verdickten Kopf versehen ist. Innerhalb des Schaftes des Stiftes ist eine elektronische Identifikations-Einrichtung vorgesehen. Bei dieser bekannten Ohrmarke kann das widerhakenförmige Ende der vorderen Pfeilspitze nur mit einem verhältnismäßig kleinen Durchmesser versehen werden, damit die Ohrmuschel beim Durchstechen nicht unzulässig stark verletzt wird. Diese widerhakenförmige Pfeilspitze reicht zwar aus, die Ohrmarke unter normalen Verhältnissen am Ohr festzuhalten, jedoch kann die Ohrmarke verhältnismäßig leicht entgegen ihrer Pfeilrichtung durch die Ohrmuschel wieder zurückgedrückt und von der Ohrmuschel abgezogen werden, so daß diese Ohrmarke ohne weiteres an einem anderen Tier wieder angebracht werden kann.

Der Erfindung liegt die Aufgabe zugrunde, eine gattungsgemäße Ohrmarke derart mit einer elektronischen Identifikations-Einrichtung auszurüsten, daß sie umhängesicher ist.

Zur Lösung dieser Aufgabe ist erfindungsgemäß vorgesehen, daß innerhalb des Schaftes des Stiftes eine elektronische Identifikations-Einrichtung eingebettet ist, die sich über den größeren Teil der Länge des Stiftes erstreckt und beidendig bis in die Stiftbereiche hineinragt, die von den beiden Flachteilen umschlossen sind.

Ohrmarken der hier behandelten Art können zerstörungsfrei nicht von der Ohrmuschel abgenommen werden, sondern ihre Entfernung erfolgt mittels einer Abkneifzange, mit der der Stift durchgekniffen wird. Nach Durcht rennung des Stiftes können höchstens die beiden Flachteile wiederverwendet werden, nicht aber der zerstörte Stift, woraus sich sofort ergibt, daß die im Stift untergebrachte Identifikations-Einrichtung praktisch nicht mehr benutzt werden kann. Es besteht zwar die Möglichkeit, daß jemand versucht, die Stifthälften wieder zu einem brauchbaren Stift zusammenzuleimen oder zusammenzuschweißen, was allerdings schon einigen Aufwand bedeuten würde. Um aber auch diese Manipulationsmöglichkeit auszuschließen, ist der Erfindung zufolge vorgesehen, daß die elektronische Identifikations-Einrichtung beidendig über die Abkneifzonen des Stiftes hinausragt, also beidendig bis in die Stiftbereiche hineinragt, die von den bei den Flachteilen umschlossen werden. Wird eine solche Ohrmarke von der Ohrmuschel abgekniffen, führt dies zwangsläufig zu einer Zerstörung der Identifikations-Einrichtung, so daß jegliche Weiterverwendung und Manipulation sicher ausgeschlossen ist.

Der Gegenstand der Erfindung wird im folgenden anhand eines in der Zeichnung dargestellten Ausführungsbeispieles näher beschrieben. In der Zeichnung zeigen:
- Fig. 1: in Draufsicht eine dreiteilige Ohrmarke, angebracht an einer Ohrmuschel,
- Fig. 2: einen Schnitt durch die Ohrmarke nach Fig. 1,
- Fig. 3: eine Seitenansicht auf den in der Fig. 1 linken Flachteil der Ohrmarke und
- Fig. 4: eine Seitenansicht auf den in Fig. 1 rechten Flachteil der Ohrmarke.

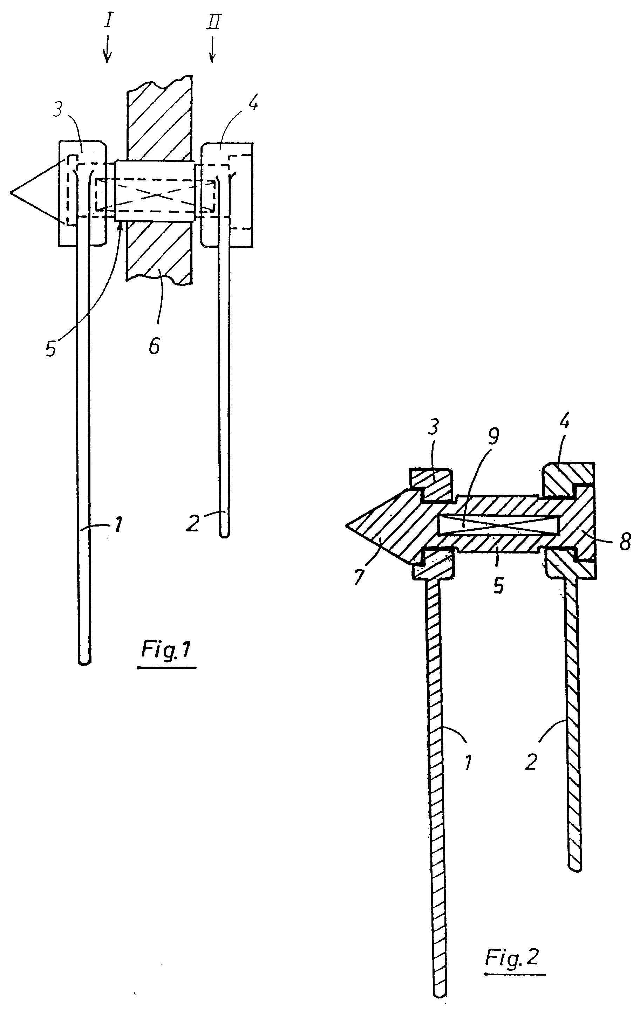

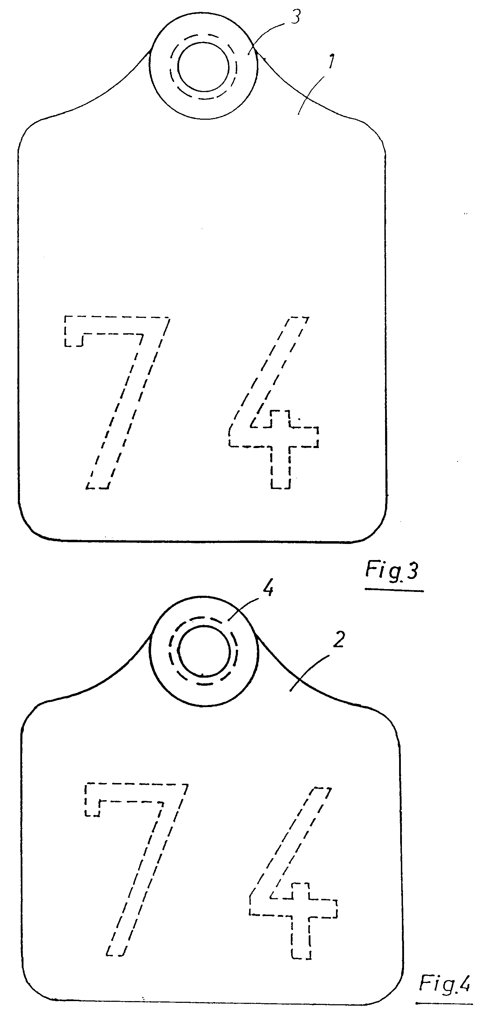

Die in den Fig. 1 bis 4 dargestellte Ohrmarke besteht aus zwei laschenförmigen Flachteilen 1, 2, die jeweils ein nabenförmiges Auge 3, 4 besitzen, und aus einem Stift 5, der durch das Auge 4 des Flachteiles 2, anschließend durch die Ohrmuschel 6 und danach durch das Auge 3 des Flachteiles 1 gesteckt wird. Der Stift 5 weist an seinem der Spitze 7 abgewandten Ende einen verdickten Kopf 8 auf, welcher bündig von einer Ausnehmung des Auges 4 aufgenommen wird. Der Stift 5 ist hinter seiner Spitze 7 und neben seinem Kopf 8 mit je einem im Durchmesser reduzierten Abschnitt versehen, deren Durchmesser etwa gleich den Innendurchmessern der Augen 3, 4 sind und in die die Augen 3, 4 beim Eindrücken des Stiftes 5 einschnappen, so daß die Ohrmarke nicht zerstörungsfrei von der Ohrmuschel 6 gelöst werden kann. Vielmehr werden zum Entfernen der Ohrmarken zangenartige Werkzeuge eingesetzt, die in einer der Abkneifzonen I oder II angesetzt werden, also jeweils zwischen einem der Flachteile 1, 2 und der Ohrmuschel 6.

Der Erfindung zufolge ist innerhalb des Schaftes des Stiftes 5 eine elektronische Identifikations-Einrichtung 9, z. B. ein Antwortsender, eingebaut, der vollständig vom Kunststoffmaterial des Stiftes 5 umgespritzt ist. Die Einrichtung 9 erstreckt sich über den größeren Teil der Länge des Stiftes 5 und ragt beidendig über die Abkneifzonen I und II des Stiftes 5 hinaus, so daß sie bei einem Abkneifen der Ohrmarke zwangsläufig zerstört wird.

## Patentansprüche

1. Ohrmarke für Tiere, welche einen durch die Ohrmuschel (6) zu stechenden, angespitzten Stift (5), der an seinem der Spitze (7) gegenüberliegenden Ende mit einem verdickten Kopf (8) versehen ist, und zwei laschenförmige Flachteile (1, 2) aufweist, die jeweils mit einem Auge (3, 4) versehen sind, durch welche der Stift unter Einfassung der Ohrmuschel hindurchsteckbar ist, wobei der Stift (5) und die beiden Flachteile (1, 2) als unlösbare Schnappverbindung ausgebildet sind, wozu der Stift (5) neben seiner Spitze (7) und neben seinem Kopf (8) mit je einem im Durchmesser reduzierten Abschnitt versehen ist, dessen Durchmesser etwa gleich dem Innendurchmesser der Augen (3, 4) ist, und wobei der Stift (5) jeweils zwischen den Flachteilen (1, 2) und der zu durchstechenden Ohrmuschel liegende Abkneifzonen zum Trennen der Ohrmarke von der Ohrmuschel aufweist, dadurch gekennzeichnet, daß innerhalb des Schaftes des Stiftes (5) eine elektronische Identifikations-Einrichtung (9) eingebettet ist, die sich über den größeren Teil der Länge des Stiftes (5) erstreckt und beidendig bis in die Stiftbereiche hineinragt, die von den beiden Flachteilen (1, 2) umschlossen sind.

2. Ohrmarke nach Anspruch 1, dadurch gekennzeichnet, daß die Identifikations-Einrichtung (9) ein Antwortsender ist.

## Claims

1. Ear tag for animals, which has a pointed pin (5) whose purpose is to pierce the auricle (6) and which is equipped with a thickened head (8) on the opposite end to its point (7), and two tab-shaped flat parts (1,2) each equipped with an eyelet (3,4) through which the pin may be inserted while the auricle is being held, wherein the pin (5) and the two flat parts (1,2) are designed as a permanent snap-on connection, for which purpose the pin(5) is equipped near its end (7) and near its head (8) with sections which are reduced in diameter, their diameter being roughly equal to the interior diameter of the eyelets (3,4), and wherein the pin (5) has pinch-off zones, positioned between the respective flat parts (1,2) and the auricle to be pierced, for the purpose of removing the ear tag from the auricle, characterized in that an electronic identification device (9) is embedded within the shaft of the pin (5) and extends through the greater part of the pin(5), projecting at both ends into the areas of the pin which are enclosed by the two flat parts (1,2).

2. Ear tag according to Claim 1, characterized in that the identification device (9) is a transponder.

## Revendications

1. Marque d'oreille pour animaux, qui est munie d'une tige (5) épointée, à piquer dans le pavillon d'oreille (6), pourvue, à son extrémité opposée à la pointe (7), d'une tête (8) épaissie, et qui présente deux parties plates (1, 2) en forme de pattes, pourvues chacune d'un oeillet (3, 4), à travers lequel la pointe peut être enfichée, enchassant le pavillon d'oreille, la tige (5) et les deux parties plates (1, 2) étant réalisées sous forme de liaison à déclic indésolidarisable, ce pourquoi la tige (5) est pourvue, outre sa pointe (7) et outre sa tête (8), d'un tronçon a diamètre diminué, dont le diamètre est à peu près égal à celui des oeillets (3, 4), et la tige (5) présentant entre chacune des parties plates (1, 2) et le pavillon d'oreille transpercé, des zones de découpage destinées à opérer la séparation entre la marque d'oreille et le pavillon d'oreille, caractérisée en ce qu'à l'intérieur du fût de la tige (5) est logé un dispositif d'identification électronique (9) s'étendant sur la majeure partie de la longueur de la tige (5) et pénétrant aux deux extrémités jusque dans les zones de pointe entourées par les deux parties plates (1, 2).

2. Marque d'oreille selon la revendication 1, caractérisée en ce que le dispositif d'identification est un répondeur.
